# EUROPÄISCHE PATENTANMELDUNG

(11) **EP 4 328 465 A1**
(43) Veröffentlichungstag der Anmeldung: **28.02.2024**
(21) Anmeldenummer: 22192355.0
(22) Anmeldetag: 26.08.2022
(51) Int. Cl.: F16H 57/04

(54) **GETRIEBE MIT KONSTANTEM ÖLSUMPFRÜCKFLUSS**

(71) Anmelder: Flender GmbH, 46395 Bocholt (DE)
(72) Erfinder: Möllendorf, Ralf, 46395 Bocholt (DE)
(74) Vertreter: Michalski Hüttermann & Partner Patentanwälte mbB

(57) **Zusammenfassung**

Die Erfindung betrifft ein Getriebe 10 mit einem Getriebegehäuse 12, in dem ein Ölsumpfreservoir 20 und zumindest ein Ölauffangvolumen 26 aufgenommen sind, mit mehreren in dem Getriebegehäuse 12 über Lagerstellen 16 drehbar gelagerten Verzahnungselementen 14, wobei eine Ablaufbohrung 30 zwischen dem zumindest einen Ölauffangvolumen 26 und dem Ölsumpfreservoir 20 vorgesehen ist. Ein Öffnungsquerschnitt 32 der Ablaufbohrung 30 ist in Abhängigkeit einer Öltemperatur zwischen einem reduziert geöffneten Maß und einem geöffneten Maß stellbar. Ein Gleichbleiben des Rücklaufvolumenstrom wird hierbei erreicht, ohne dass eine aufwändige Sensor- und Regelungstechnik und ohne dass ein zusätzlicher Energiebedarf vorgesehen werden muss.

## Beschreibung

Die Erfindung betrifft ein Getriebe mit einem Getriebegehäuse, in dem ein Ölsumpfreservoir und zumindest ein Ölauffangvolumen aufgenommen sind, mit mehreren in dem Getriebegehäuse über Lagerstellen drehbar gelagerten Verzahnungselementen, wobei eine Ablaufbohrung zwischen dem zumindest einen Ölauffangvolumen und dem Ölsumpfreservoir vorgesehen ist.

In Getriebegehäusen von Getrieben wird regelmäßig neben dem Ölsumpfreservoir zumindest ein weiteres Ölauffangvolumen vorgesehen. Das Ölsumpfreservoir ist im Wesentlichen unterhalb der Verzahnungselemente derart positioniert, dass die Verzahnungselemente in die dort gehaltene Ölmenge eintauchen und während eines Betriebes Öl abschöpfen und für eine Schmierung weiterbefördern. Das zumindest eine Ölauffangvolumen dient nun dazu, während eines Betriebes eine gewisse Ölmenge aufzunehmen, um den Ölstand in dem Ölsumpfreservoir abzusenken. Durch das Absenken des Ölstandes in dem Ölsumpfreservoir wird über eine reduzierte Tauchtiefe der rotierenden Verzahnungselemente erreicht, dass Planschverluste an den Verzahnungselementen reduziert werden. Allerdings darf eine Mindesttauchtiefe der rotierenden Verzahnungselemente nicht unterschritten werden, um eine hinreichende Schmierung der Wälz- und Gleitkontakte der Verzahnungselement in jeder Betriebssituation sicherzustellen. Um eine Mindesttauchtiefe nicht zu unterschreiten, befindet sich zwischen dem Ölsumpfreservoir und dem zumindest einen Ölauffangvolumen eine Ablaufbohrung, durch die Öl in das Ölsumpfreservoir zurückströmen kann. Da sich die Viskosität von Getriebeölen mit der Öltemperatur ändert, die wiederum von den jeweiligen Betriebsbedingungen abhängt, variiert bei gleichbleibendem Öffnungsquerschnitt der Ablaufbohrung der Rücklaufvolumenstrom. Somit variiert der Ölstand in dem Ölsumpfreservoir ebenfalls in Abhängigkeit der Betriebstemperatur. Der Öffnungsquerschnitt der Ablaufbohrung wird herkömmlich auf einen für eine bestimmte Betriebstemperatur, welche sich bei einer bestimmten Betriebsbedingung erwartungsgemäß einstellen wird, passenden Rücklaufvolumenstrom ausgelegt, was allerdings bei anderen Betriebsbedingungen, insbesondere bei instationären Betriebsbedingungen, entweder zu unnötig hohen Planschverlusten oder zu einer ungenügenden Schmierung der jeweiligen Bauteile führen kann. Es besteht folglich ein Bedürfnis einen temperaturunabhängigen, gleichbleibenden Rücklaufvolumenstrom zu gewährleiten.

Es ist die Aufgabe der Erfindung Maßnahmen aufzuzeigen, die einen temperaturunabhängigen, gleichbleibenden Rücklaufvolumenstrom ermöglichen.

Die Lösung der Aufgabe erfolgt durch ein Getriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Getriebe mit einem ein Ölsumpfreservoir und zumindest ein Ölauffangvolumen aufnehmenden Getriebegehäuse, mehreren in dem Getriebegehäuse über Lagerstellen drehbar gelagerten Verzahnungselementen, wobei eine Ablaufbohrung zwischen dem zumindest einen Ölauffangvolumen und dem Ölsumpfreservoir vorgesehen ist und ein Öffnungsquerschnitt der Ablaufbohrung in Abhängigkeit einer Öltemperatur zwischen einem reduziert geöffneten Maß und einem geöffneten Maß stellbar ist.

Das Getriebegehäuse kann mehrteilig aufgebaut sein. Es können beispielsweise zwei über jeweilige Verbindungsflansche gegeneinander gesetzte Gehäusehälften vorgesehen sein. Es kann auch ein hauptsächliches Gehäuseteil vorgesehen sein, gegen das ein Gehäusedeckel gesetzt wird, um ein geschlossenes Getriebegehäuse zu erhalten. Die Gehäusehälften beziehungsweise das Gehäuseteil können wannenförmig ausgebildet sein. Das Getriebegehäuse kann jeweilige Wellendurchführungen für eine Antriebswelle und eine oder mehrere Abtriebswellen ausbilden. An das Getriebegehäuse kann in einem unteren Bereich eine Gehäuseschale angebracht sein, in der zumindest ein Teil der Ölfüllung des Ölreservoirs aufgenommen ist. Die Angaben oben und unten beziehen sich auf das Erdschwerefeld und auf die regelmäßige Einbauposition während des bestimmungsgemäßen Gebrauchs des Getriebes.

Das Ölsumpfreservoir ist durch ein Ölvolumen gebildet, das in einem unteren Bereich des Getriebegehäuses aufgenommen ist. Der Füllstand des Ölvolumens in dem Ölsumpfreservoir kann bei einem bestimmungsgemäßen Gebrauch des Getriebes derart bemessen sein, dass die Verzahnungselemente zumindest zu einem kleinen Teil in das Ölvolumen eintauchen und Öl aufnehmen können. Oberhalb des Füllstandes des Ölvolumens können innerhalb des Getriebegehäuses Ölfangbleche vorgesehen sein, die abtropfendes oder verspritztes Öl auffangen können, um es an weitere zu ölende bzw. zu schmierende Bereiche weiterzuleiten, beispielsweise an Lagerstellen.

Das Ölauffangvolumen ist physikalisch getrennt von dem Ölsumpfreservoir. Das Ölauffangvolumen ist lediglich über eine Ablaufbohrung bzw. Überströmöffnung mit dem Ölsumpfreservoir verbunden. Die Ablaufbohrung bzw. Überströmöffnung kann durch einen zusammenhängenden oder mehrere einzelne Öffnungsquerschnitte das Ölauffangvolumen mit dem Ölsumpfreservoir verbinden. Die Ablaufbohrung ist zweckmäßigerweise oberhalb eines Ölstands des Ölsumpfreservoirs angeordnet. Das Ölauffangvolumen und das Ölsumpfreservoir können auf einer gleichen Vertikalposition liegen oder das Ölauffangvolumen kann auf einer höheren Vertikalposition liegen, als das Ölsumpfreservoir. Das Ölauffangvolumen kann als separates Behältnis in dem Getriebegehäuse vorliegen. Das Ölauffangvolumen kann auch als von dem Ölsumpfreservoir abgetrennten Bereich innerhalb des Getriebegehäuses vorgesehen sein. Die Abtrennung kann beispielsweise durch einen vertikalen Steg innerhalb des Getriebegehäuses erfolgen. Zwischen dem Ölauffangvolumen und dem Ölsumpfreservoir kann zudem eine Ausgleichsbohrung vorgesehen sein, über die während eines Stillstandes des Getriebes das Öl in das Ölsumpfreservoir überläuft und zwar entweder bis zu einem übereinstimmenden Ölstand, wenn Ölauffangvolumen und Ölsumpfreservoir auf gleicher Vertikalposition liegen, oder bis das Ölauffangvolumen leer gelaufen ist, wenn dieses auf einer höheren Vertikalposition liegt.

Der Öffnungsquerschnitt der Ablaufbohrung ist in seinem Maß variabel. Bei dem Maß handelt es sich um ein Flächenmaß oder um einen Durchmesser, sofern die Ablaufbohrung kreisrund ausgeführt ist. Die Öltemperatur ist die Stellgröße, nach der der Öffnungsquerschnitt gestellt wird. Die Öltemperatur wird in unmittelbarer Nähe der Ablaufbohrung erfasst und als Stellgröße herangezogen. Bevorzugt ist insbesondere, wenn die Öltemperatur unmittelbar in der Ablaufbohrung erfasst wird. Hierdurch wird ein besonders schnelles Stellen des Öffnungsquerschnitts als Reaktion auf Temperaturänderungen erreicht. Über einen derart stellbaren Öffnungsquerschnitt der Ablaufbohrung wird erreicht, dass das Öl von dem Ölauffangvolumen mit einem zumindest weitestgehend gleichbleibenden Rücklaufvolumenstrom in das Ölsumpfreservoir zurückfließt. Der gleichbleibenden Rücklaufvolumenstrom ist hierbei temperaturunabhängig, so dass der Ölstand in dem Ölsumpfreservoir unabhängig von den jeweils herrschenden Betriebsbedingungen des Getriebes konstant gehalten wird. Ein Gleichbleiben des Rücklaufvolumenstrom wird hierbei erreicht, ohne dass eine aufwändige Sensor- und Regelungstechnik und ohne dass ein zusätzlicher Energiebedarf vorgesehen werden muss.

Es ist vorgesehen, dass der Öffnungsquerschnitt der Ablaufbohrung bei einer Öltemperaturerhöhung ein Stellen in Richtung des reduziert geöffneten Querschnittsmaß erfährt. Wenn also das Getriebe bzw. das Öl zunächst kalt sind, da es sich beispielsweise nach einem Stillstand in einer Anlaufphase befindet, hat das Öl eine hohe Viskosität, d.h. es ist zähflüssig. Damit nun der Ölstand in dem Ölsumpfreservoir nicht zu stark abfällt, was der Fall wäre, wenn das kalte, zähflüssige Öl nicht ausreichend schnell über die Ablaufbohrung von dem Ölauffangvolumen in das Ölsumpfreservoir zurückfließen kann, muss das Querschnittsmaß der Ablaufbohrung vergrößert werden, d.h. die Ablaufbohrung muss zunächst in Richtung des geöffneten Querschnittmaß gestellt werden. Im Verlauf einer Erwärmung des Öls durch fortlaufenden Betrieb des Getriebes wird das Öl dünnflüssiger bzw. dessen Viskosität sinkt, so dass die Ablaufbohrung in Richtung des reduziert geöffneten Querschnittsmaß gestellt wird, um den Rücklaufvolumenstrom und den Ölstand im Ölsumpfreservoir konstant zu halten. Hierdurch wird verhindert, dass bei warmem, dünnflüssigem Öl ein zu starker Rücklauf in das Ölsumpfreservoir erfolgt, dort der Ölstand zu stark steigt und ungewollte Planschverluste die Folge sind.

In einer konkreten Ausgestaltung kann vorgesehen sein, dass ein zwischen einer geschlossenen Stellung und einer geöffneten Stellung bewegliches Ventilelement vorgesehen ist, über das die Ablaufbohrung zwischen dem reduziert geöffneten Maß und einem geöffneten Maß stellbar ist. Das Ventilelement kann derart ausgeführt sein, dass es die Ablaufbohrung beinhaltet. Bei einer Ausführung kann das Ventilelement als umfangsveränderliche Blende ausgebildet sein, die in einer geschlossenen Stellung die reduziert geöffnete Ablaufbohrung und in einer geöffneten Stellung die geöffnete Ablaufbohrung ausbildet. In einer alternativen Ausführung kann das Ventilelement als schwenkbare Verschlussklappe ausgebildet ist, die in einer geschlossenen Stellung die Ablaufbohrung zumindest teilweise verschließt und in einer geöffneten Stellung die Ablaufbohrung freigibt. Hierbei kann für die Aktuatorik der Blende und der Verschlussklappe vorgesehen sein, dass die Aktuatorik zumindest ein Bi-Metall-Element umfasst, über das das Ventilelement in Abhängigkeit der Öltemperatur zwischen der geschlossenen Stellung und der geöffneten Stellung bewegt wird.

Die angegebene Aufgabe wird zudem gelöst durch ein Verfahren zum Steuern eines temperaturunabhängigen Ölstands in einem Ölsumpfreservoir eines Getriebes, bei dem ein Getriebegehäuse mit einem Ölsumpfreservoir, zumindest einem Ölauffangvolumen und einer Ablaufbohrung zwischen dem zumindest einen Ölauffangvolumen und dem Ölsumpfreservoir bereitgestellt wird und in Abhängigkeit einer Öltemperatur eines in dem Getriebegehäuse gehaltenen Ölvolumens ein Öffnungsquerschnitt der Ablaufbohrung zwischen einem reduziert geöffneten Maß und einem geöffneten Maß gestellt wird.

Bei einer bevorzugten Verfahrensausgestaltung ist vorgesehen, dass der Öffnungsquerschnitt der Ablaufbohrung bei einer Öltemperaturerhöhung in Richtung des reduziert geöffneten Querschnittsmaß gestellt wird und bei einer Öltemperaturreduzierung in Richtung des geöffneten Querschnittsmaß gestellt wird. In einer Mehrzahl der Betriebszuständen erfolgt ein Ölfluss von dem Ölauffangvolumen durch die Ablaufbohrung in das Ölsumpfreservoir.

Die Aufgabenstellung wird zudem gelöst durch eine Industrie-Applikation, die ein Antriebsmittel aufweisen kann, das beispielsweise als elektrische Maschine, Brennkraftmaschine, Hydraulikmotor ausgestaltet sein kann. Das Antriebsmittel kann mit einem Getriebe zur Wandlung eines Drehmoments und einer Drehzahl der von dem Antriebsmittel erzeugten Leistung gekoppelt sein, wobei das Getriebe wie vorstehend beschrieben aus- und weitergebildet sein kann und insbesondere in seinem Getriebegehäuse eine Ablaufbohrung zwischen dem zumindest einen Ölauffangvolumen und dem Ölsumpfreservoir ausbildet und ein Öffnungsquerschnitt der Ablaufbohrung in Abhängigkeit einer Öltemperatur zwischen einem reduziert geöffneten Maß und einem geöffneten Maß stellbar ist. Das Getriebe der Industrie-Applikation kann wiederum drehmomentübertragend mit einer mechanischen Anwendung gekoppelt sein, in der über das Getriebe eingeleitete bzw. übertragene mechanische Energie genutzt werden kann. Bei der mechanischen Anwendung handelt es sich beispielsweise um ein Förderband, Pumpe, Kran, Lüfter, Rührwerk, Hubvorrichtung, sofern bei diesen Anwendungen ein Stirnradgetriebe oder ein Kegelstirnradgetriebe zum Einsatz kommt.

Die Lösung der zugrundeliegende Aufgabenstellung erfolgt zudem durch ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen der Ablaufbohrung mit dem temperaturunabhängigen Rücklaufvolumenstrom des vorstehend beschriebenen Getriebes, wobei die Datenpakete dazu hergerichtet sind bei einer Verarbeitung durch eine Datenverarbeitungseinrichtung eine additive Herstellung der Bestandteile der Ablaufbohrung, insbesondere durch 3D-Druck mittels eines 3D-Druckers, und/oder eine Simulation der Funktionsweise des Getriebes mit der Ablaufbohrung durchzuführen. Dies ermöglicht eine kostengünstige Herstellung von Prototypen und/oder computerbasierten Simulationen, um die Funktionsweise des Getriebes zu studieren, Probleme im konkreten Anwendungsfall zu identifizieren und Verbesserungen zu finden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung eines Getriebes mit einem Ölsumpfreservoir,
Fig. 2: eine schematische Darstellung eines Getriebes nach Fig. 1 mit einem zusätzlichen Ölauffangvolumen und
Fig. 3: eine prinzipmäßige Darstellung einer Industrie-Applikation.

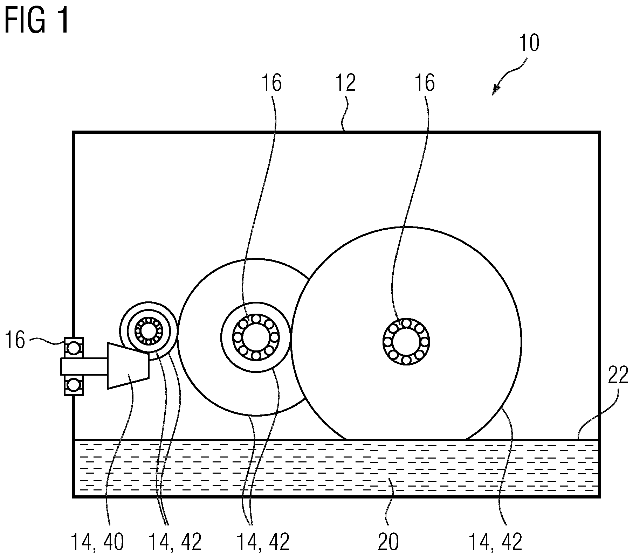

Die Fig. 1 zeigt rein schematisch ein Getriebe 10 mit einem Getriebegehäuse 12, in dem in einem unteren Bereich ein Ölsumpfreservoir 20 vorgesehen ist, in dem ein Ölvolumen oder Schmiermittelvolumen bis zu einem Ölstand 22 gehalten ist. Die Höhe des Ölstands 22 kann in Abhängigkeit von Betriebszuständen variieren. In dem Getriebegehäuse 12 sind ferner Verzahnungselemente 14 aufgenommen, die über Lagerstellen 16 gegenüber dem Getriebegehäuse 12 gehalten und drehbar gelagert sind. Rein exemplarisch sind die Verzahnungselemente 14 als Kegelrad 40 und als Stirnräder 42 dargestellt. Die Lagerstellen 16 sind ebenfalls rein exemplarisch als Wälzlager 44 dargestellt, über die die Kegelräder 40 und die Stirnräder 42 mittelbar über Wellen gegenüber dem Getriebegehäuse 12 gelagert sind.

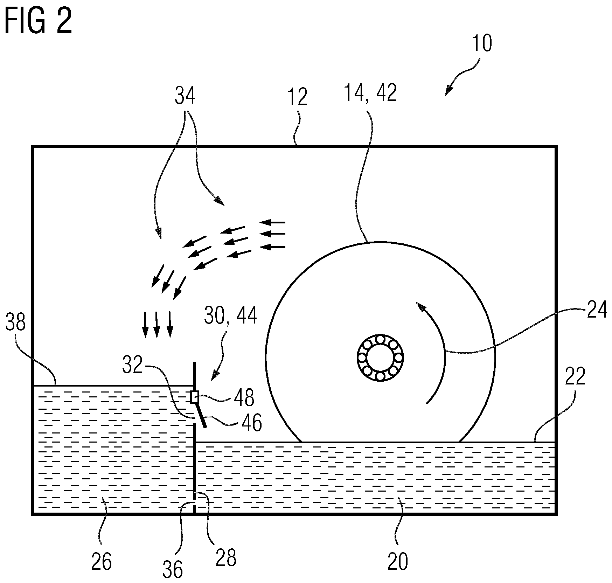

Die Figur 2 zeigt eine prinzipielle Darstellung einer Anordnung, mit der ein Ölstand 22 in dem Ölsumpfreservoir 20 über verschiedene Betriebszustände zumindest weitestgehend konstant gehalten werden kann. Die Darstellung zeigt ein als Stirnrad 42 ausgeführtes Verzahnungselement 14, dessen Drehrichtung durch den Pfeil mit dem Bezugszeichen 24 symbolisiert ist. In dem Getriebegehäuse 12 ist unten neben dem Ölsumpfreservoir 20 über eine vertikale Trennwand 28 ein Ölauffangvolumen 26 abgetrennt, in dem eine Teilölvolumen aufgenommen sein kann. In dem Ölauffangvolumen 26 ist mit dem Bezugszeichen 38 ein Ölstand symbolisiert. Das Stirnrad 42 ist unten ein gewisses Stück in das Ölsumpfreservoir 20 eingetaucht, so dass das Stirnrad 42 infolge der Drehung fortlaufend eine gewisse Ölmenge aus dem Ölsumpfreservoir 20 ausschöpft, welches infolge der wirkenden Zentrifugalkraft von dem Stirnrad 42 abgeschleudert wird. Durch eine geeignete Anordnung des Ölauffangvolumens 26 besteht keine Abhängigkeit von der Drehrichtung der Verzahnungselemente. Ein Teil dieser ausgeschöpften und wieder abgeschleuderten Ölmenge landet in dem Ölauffangvolumen 26, so dass die Ölmenge in dem Ölsumpfreservoir 20, und damit der Ölstand 22, sinkt und der Ölstand 38 in dem Ölauffangvolumen 26 zunimmt. Der Teil der Ölmenge, der in dem Ölauffangvolumen 26 landet, ist mit der Pfeilschar und dem Bezugszeichen 34 symbolisiert.

Zwischen dem Ölsumpfreservoir 20 und dem Ölauffangvolumen 26 ist eine Ablaufbohrung 30 vorgesehen, die vorliegend in der vertikalen Trennwand 28 angeordnet ist. Die Ablaufbohrung 30 besitzt ein Öffnungsquerschnitt 32, der in Abhängigkeit einer Öltemperatur zwischen einem reduziert geöffneten Maß und einem geöffneten Maß stellbar ist. Hierbei besteht eine Abhängigkeit dahingehend, dass bei einer Öltemperaturerhöhung der Öffnungsquerschnitt reduziert wird. Die vertikale Höhe der Ablaufbohrung 30 liegt oberhalb des maximalen Ölstandes 22 des Ölsumpfreservoirs 20. Es kann zudem in einem unteren Bereich der vertikalen Trennwand 28 eine Ausgleichsbohrung 36 vorgesehen sein, über die sich während eines Stillstandes des Getriebes 10 die Ölstände 22, 38 von Ölsumpfreservoir 20 und Ölauffangvolumen 26 im Wesentlichen ausgleichen.

Es ist ein Ventilelement 44 vorgesehen, über das die Ablaufbohrung 30 zwischen dem reduziert geöffneten Maß und einem geöffneten Maß stellbar ist. Vorliegend umfasst das Ventilelement 44 eine schwenkbare Verschlussklappe 46, die in einer geschlossenen Stellung die Ablaufbohrung 30 zumindest teilweise verschließt und in einer geöffneten Stellung die Ablaufbohrung 30 freigibt. Zudem umfasst das Ventilelement 44 ein Bi-Metall-Element 48, das die Verschlussklappe 46 zwischen der geschlossenen Stellung und der geöffneten Klappe in Abhängigkeit der Öltemperatur aktuiert. In einer alternativen Ausführung kann die Verschlussklappe 46 als querschnittssveränderliche Blende ausgebildet sein, die dann ebenfalls über ein Bi-Metall-Element aktuiert wird, was vorliegend allerdings nicht dargestellt ist.

Wenn nach einer Stillstandszeit das Getriebe 12 mit kaltem Öl, d.h. einer normalerweise vorherrschenden Umgebungstemperatur entsprechend, anläuft, ist das Öl zunächst zähflüssig und weist eine höhere Viskosität auf. Indem die Ölmenge 34 fortlaufend in dem Ölauffangvolumen 26 landet, erhöht sich dort der Ölstand 38, bis er auf Höhe der Ablaufbohrung 30 steht und über diese Öl in das Ölsumpfreservoir 20 zurückläuft. In diesem Betriebszustand bei kaltem und zähflüssigem Öl befindet sich der Öffnungsquerschnitt 32 der Ablaufbohrung 30 in der geöffneten Stellung, so dass das zähflüssige Öl in ausreichender Menge in das Ölsumpfreservoir 20 zurückfließen kann und dort der Ölstand 22 nicht zu stark sinkt. Mit fortlaufendem Betrieb des Getriebes 12 erwärmt sich das Öl und wird infolge sinkender Viskosität dünnflüssiger. Über das Bi-Metall-Element 48 erfolgt gleichzeitig ein Aktuieren des Ventilelements 44, so dass sich der Öffnungsquerschnitt 32 der Ablaufbohrung 30 für das zunehmend dünnflüssigere Öl reduziert und der Rücklaufvolumenstrom zumindest annähernd konstant bleibt.

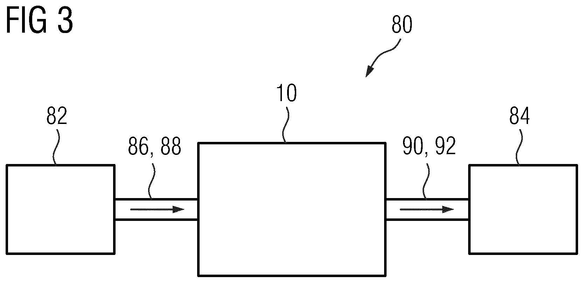

Eine Ausführungsform einer Industrie-Applikation 80, bei der eine Ausführung des beschriebenen Getriebes zum Einsatz kommt, ist in der Figur 3 dargestellt. Die Industrie-Applikation 80 umfasst ein Antriebsmittel 82, das beispielsweise als Elektromotor, als Verbrennungsmotor oder als Hydraulikmotor ausgebildet ist. Das Antriebsmittel 82 ist drehmomentübertragend mit dem Getriebe 10 gekoppelt, das wiederum mit einer mechanischen Anwendung 84 verbunden ist. Das Antriebsmittel 82 ist zum Abgeben einer Antriebsleistung 86 ausgebildet, die über eine Leistungswelle 88 dem Getriebe 10 zugeführt wird. Durch das Getriebe 10 wird die eingehende Antriebsleistung 86, unter Berücksichtigung von Reibungsverlusten, bezüglich Drehzahl und Drehmoment gewandelt und als Ausgangsleistung 90 über eine Leistungswelle 21 an die mechanische Anwendung 84 weitergeleitet. Dabei ist die Drehzahl an der ersten Leistungswelle 88 niedriger als an der zweiten Leistungswelle 92. Das Getriebe 10 kann beispielsweise als Stirnradgetriebe oder als Kegelstirnradgetriebe ausführt sein. Die mechanische Anwendung 84 kann als Förderband, Pumpe, Kran, Lüfter, Rührwerk, Hubvorrichtung ausgebildet sein.

### Bezugszeichenliste

- 10: Getriebe
- 12: Getriebegehäuse
- 14: Verzahnungselemente
- 16: Lagerstelle
- 20: Ölsumpfreservoir
- 22: Ölstand
- 24: Drehrichtung
- 26: Ölauffangvolumen
- 28: Trennwand
- 30: Ablaufbohrung
- 32: Öffnungsquerschnitt
- 34: Ölmenge
- 36: Ausgleichsbohrung
- 38: Ölstand
- 40: Kegelrad
- 42: Stirnrad
- 44: Ventilelement
- 46: Verschlussklappe
- 48: Bi-Metall-Element
- 80: Industrie-Applikation
- 82: Antriebsmittel
- 84: mechanischen Anwendung
- 86: Antriebsleistung
- 88: Leistungswelle
- 90: Ausgangsleistung
- 92: Leistungswelle

## Patentansprüche

1. Getriebe (10) mit
einem ein Ölsumpfreservoir (20) und zumindest ein Ölauffangvolumen (26) aufnehmenden Getriebegehäuse (12),
mehreren in dem Getriebegehäuse (12) über Lagerstellen (16) drehbar gelagerten Verzahnungselementen (14, 40, 42),
wobei eine Ablaufbohrung (30) zwischen dem zumindest einen Ölauffangvolumen (26) und dem Ölsumpfreservoir (20) vorgesehen ist,
**dadurch gekennzeichnet, dass** ein Öffnungsquerschnitt (32) der Ablaufbohrung (30) in Abhängigkeit einer Öltemperatur zwischen einem reduziert geöffneten Maß und einem geöffneten Maß stellbar ist.

2. Getriebe (10) nach Anspruch 1, **dadurch gekennzeichnet, dass** der Öffnungsquerschnitt (32) der Ablaufbohrung (30) bei einer Öltemperaturerhöhung ein Stellen in Richtung des reduziert geöffneten Querschnittsmaß erfährt.

3. Getriebe (10) nach Anspruch 1 oder 2, **dadurch gekennzeichnet, dass** ein zwischen einer geschlossenen Stellung und einer geöffneten Stellung bewegliches Ventilelement (44) vorgesehen ist, über das die Ablaufbohrung (30) zwischen dem reduziert geöffneten Maß und einem geöffneten Maß stellbar ist.

4. Getriebe (10) nach Anspruch 3, **dadurch gekennzeichnet, dass** das Ventilelement (44) als schwenkbare Verschlussklappe (46) ausgebildet ist, die in einer geschlossenen Stellung die Ablaufbohrung (30) zumindest teilweise verschließt und in einer geöffneten Stellung die Ablaufbohrung (30) freigibt.

5. Getriebe (10) nach Anspruch 3, **dadurch gekennzeichnet, dass** das Ventilelement (44) als querschnittsveränderliche Blende ausgebildet ist, die in einer geschlossenen Stellung die reduziert geöffnete Ablaufbohrung (30) und in einer geöffneten Stellung die geöffnete Ablaufbohrung (30) ausbildet.

6. Getriebe (10) nach einem der Ansprüche 2 bis 5, **dadurch gekennzeichnet, dass** ein Bi-Metall-Element (48) vorgesehen ist, das das Ventilelement (44) in Abhängigkeit der Öltemperatur zwischen der geschlossenen Stellung und der geöffneten Stellung bewegt.

7. Getriebe (10) nach einem der Ansprüche 1 bis 6, **dadurch gekennzeichnet, dass** die Ablaufbohrung (30) oberhalb eines Ölstands des Ölsumpfreservoirs (20) angeordnet ist.

8. Verfahren zum Steuern eines temperaturunabhängigen Ölstands in einem Ölsumpfreservoir (20) eines Getriebes (10), bei dem
ein Getriebegehäuse (12) mit einem Ölsumpfreservoir (20), zumindest einem Ölauffangvolumen (26) und einer Ablaufbohrung (30) zwischen dem zumindest einen Ölauffangvolumen (26) und dem Ölsumpfreservoir (20) bereitgestellt wird und
in Abhängigkeit einer Öltemperatur eines in dem Getriebegehäuse (12) gehaltenen Ölvolumens ein Öffnungsquerschnitt (32) der Ablaufbohrung (30) zwischen einem reduziert geöffneten Maß und einem geöffneten Maß gestellt wird.

9. Verfahren nach Anspruch 8, bei dem der Öffnungsquerschnitt (32) der Ablaufbohrung (30) bei einer Öltemperaturerhöhung in Richtung des reduziert geöffneten Querschnittsmaß gestellt wird und bei einer Öltemperaturreduzierung in Richtung des geöffneten Querschnittsmaß gestellt wird.

10. Verfahren nach Anspruch 8 oder 9, bei dem in einer Mehrzahl an Betriebszuständen ein Ölfluss von dem Ölauffangvolumen (26) durch die Ablaufbohrung (30) in das Ölsumpfreservoir erfolgt.

11. Verfahren nach Anspruch 10, bei dem in der Mehrzahl der Betriebszustände der Ölfluss einen über die Zeit konstanten Rücklaufvolumenstrom von dem Ölauffangvolumen (26) in das Ölsumpfreservoir (20) bewirkt.

12. Industrieapplikation (80), umfassend ein Antriebsmittel (82), das drehmomentübertragend mit einem Getriebe (10) verbunden ist, wobei das Getriebe (10) drehmomentübertragend mit einer mechanischen Anwendung (84) gekoppelt ist, **dadurch gekennzeichnet, dass** das Getriebe (10) nach einem der Ansprüche 1 bis 7 ausgebildet ist.

13. Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen des Getriebes (10) nach einem der Ansprüche 1 bis 7 vorgesehenen Bestandteile, wobei die Datenpakete dazu hergerichtet sind bei einer Verarbeitung durch eine Datenverarbeitungseinrichtung eine additive Herstellung der Bestandteile des Getriebes (10), insbesondere durch 3D-Druck mittels eines 3D-Druckers, und/oder eine Simulation der Funktionsweise des Getriebes (10) durchzuführen.
